# FASCICULE DE BREVET EUROPEEN

(11) **EP 2 944 563 B1**
(45) Date de publication et mention de la délivrance du brevet: **10.04.2019**
(21) Numéro de dépôt: 15165900.0
(22) Date de dépôt: 30.04.2015
(51) Int. Cl.: B64C 1/24

(54) **AVION EQUIPE D'UN DISPOSITIF POUR ACCEDER A UN COMPARTIMENT DEPUIS LE SOL**
FLUGZEUG MIT EINER VORRICHTUNG, UM VOM BODEN AUS IN EIN ABTEIL ZU GELANGEN
AEROPLANE PROVIDED WITH A DEVICE FOR ACCESSING A COMPARTMENT FROM THE GROUND

(30) Priorité: 14.05.2014 FR 1454272
(43) Date de publication de la demande: 18.11.2015
(73) Titulaire: AIRBUS OPERATIONS (S.A.S), 31060 Toulouse (FR)
(72) Inventeur: Chourreau, Yannick, 31140 Montberon (FR); Salgues, Patrick, 31100 Toulouse (FR); Brethes, Richard, 31330 Grenade (FR)
(74) Mandataire: Gicquel, Olivier Yves Gérard

(56) Documents cités:
- EP-A2- 0 197 873
- GB-A- 604 929
- GB-A- 833 730
- US-A- 2 294 000
- US-A- 2 558 975
- US-A- 2 647 677

## Description

La présente invention se rapporte à un avion équipé d'un dispositif pour accéder à un compartiment depuis le sol.

Pour procéder à des opérations de maintenance, des équipements installés dans certains compartiments d'un avion sont accessibles depuis le sol, via une ouverture prévue au niveau du fuselage de l'avion, en utilisant une échelle rigide.

Lors de son utilisation, les extrémités inférieures des montants de l'échelle reposent au sol alors que les parties supérieures des montants sont en appui contre un rebord de l'ouverture.

La masse de l'avion variant entre autre en fonction de son chargement, la distance qui sépare le rebord de l'ouverture et le sol varie entre une hauteur maximale et une hauteur minimale. Par conséquent, pour pouvoir accéder aux équipements en toute circonstance, l'échelle doit avoir une longueur supérieure à la distance maximale pour que l'échelle repose au sol et soit en appui contre le rebord de l'ouverture.

Même si cela n'est pas toujours nécessaire, l'échelle doit avoir une longueur supérieure à la distance maximale séparant le rebord de l'ouverture et le sol. Or, plus l'échelle est longue, plus sa masse est importante ce qui va à l'encontre des objectifs d'un concepteur d'avion qui tend à réduire la masse embarquée dans l'avion.

Dans le cas d'un avion chargé, la partie de l'échelle à l'intérieur du fuselage est trop longue et rend plus difficile l'accès aux équipements.

Selon un autre aspect, l'utilisation de l'échelle n'est pas totalement sécurisée dans la mesure où l'échelle peut glisser, les parties supérieures des montants de l'échelle étant simplement en appui contre le rebord de l'ouverture. Il n'est pas possible de solidariser l'échelle à l'avion du fait que la hauteur du rebord varie, à moins de prévoir une échelle télescopique ce qui tend à augmenter significativement la masse de l'échelle.

Le document US2647677 décrit un assemblage pour une échelle rétractable, destinée à être utilisée notamment pour accéder, via une ouverture, à un compartiment d'un avion. L'échelle comprend un système d'accrochage à des moyens de guidage, prenant la forme de rails parallèles. Le système d'accrochage comprend un axe incliné dans une direction de rangement de l'échelle. L'extrémité inclinée présente une liaison pivotante avec l'échelle.

Le document EP0197873 divulgue un escalier repliable qui une fois replié s'introduit dans une ouverture d'un compartiment horizontal ménagé dans le fuselage de l'appareil et qui une fois déplié s'étend de manière inclinée vers le sol sous la porte d'accès au fuselage. L'escalier comprend un chariot monté en coulissement dans le compartiment lequel chariot reçoit en porte à faux une structure repliable d'escalier qui lorsqu'elle est logée dans le compartiment est pliée et s'étend vers l'ouverture de ce dernier. L'escalier comprend également un organe moteur soit pour pousser le chariot vers l'ouverture et extraire la structure du compartiment en dehors duquel elle sera déployée, soit pour ramener la structure dans le compartiment après que celle-ci ait été pliée et amenée lors du pliage dans l'axe du compartiment, ainsi que des moyens moteurs pour déplier ou replier, suivant un plan vertical, la structure lorsque cette dernière est en dehors du compartiment.

Aussi, la présente invention vise à remédier aux inconvénients de l'art antérieur.

A cet effet, l'invention a pour objet un avion comprenant une échelle selon les caractéristiques de la revendication 1.

Cette configuration permet de réduire la longueur de l'échelle et par conséquent de réduire sa masse. De plus, l'échelle n'est plus simplement en appui contre le rebord de l'ouverture mais elle est reliée à l'avion ce qui contribue à rendre plus sûre son utilisation.

Selon l'invention, l'échelle comprend deux montants, et pour chaque montant, un élément d'accrochage positionné à l'extrémité supérieure du montant.

Cette configuration permet de réduire la longueur de l'échelle et donc sa masse. De plus, la partie de l'échelle à l'intérieur du fuselage est la plus réduite possible ce qui permet d'éviter que l'échelle encombre l'accès.

Selon l'invention, chaque montant comprend un trou de passage, chaque support comprend une chape avec deux orifices de passage et chaque liaison démontable comprend une broche. De préférence, chaque broche comprend un système de verrouillage à bille actionnable par un bouton.

Selon une autre caractéristique, chaque montant comprend un prolongement incliné par rapport au reste du montant, l'élément d'accrochage étant positionné à l'extrémité libre du prolongement. En complément, l'échelle comprend de préférence au moins un écarteur, chaque support comprenant une surface d'appui contre laquelle l'écarteur prend appui.

Selon une autre caractéristique, l'avion comprend une glissière de rangement dans laquelle l'échelle est rangée lorsqu'elle n'est pas utilisée. Selon un mode de réalisation, la glissière de rangement comprend :
- deux longerons avec une section en C disposés en vis-à-vis, chacun d'eux étant configuré pour recevoir un montant de l'échelle,
- au moins une traverse terminale reliant les deux longerons,
- une sangle qui comprend une première extrémité reliée à un premier longeron et une seconde extrémité équipée d'une liaison détachable qui coopère avec le second longeron.

D'autres caractéristiques et avantages ressortiront de la description qui va suivre de l'invention, description donnée à titre d'exemple uniquement, en regard des dessins annexés sur lesquels :
- La figure 1 est une vue en perspective d'une échelle stockée dans une glissière de rangement qui illustre l'invention,
- La figure 2 est une vue en perspective de l'échelle de la figure 1 sortie de la glissière de rangement et solidarisée à des supports qui illustre l'invention,
- La figure 3 est une vue en perspective qui illustre en détails la zone de liaison entre l'échelle et un support,
- La figure 4 est une vue en perspective illustrant une échelle stockée dans une glissière de rangement fixée sous un plancher,
- La figure 5A est une vue de côté qui illustre une échelle stockée dans une glissière de rangement,
- La figure 5B est une vue de côté d'une échelle fixée sur ses supports avec un opérateur.

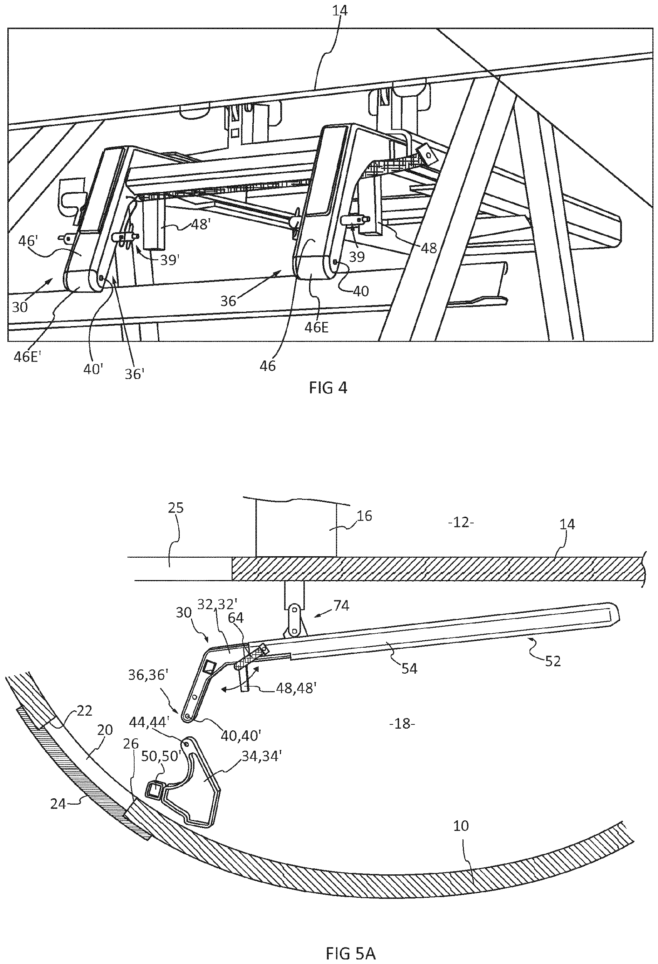

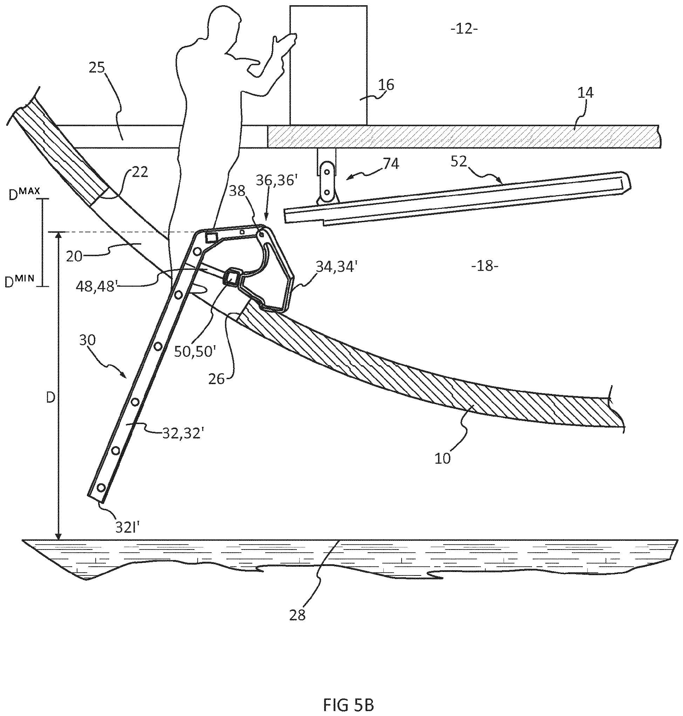

Sur les figures 5A et 5B, on a représenté une partie d'un fuselage 10 d'un aéronef, un compartiment 12 à l'intérieur du fuselage 10, une partie du plancher 14 du compartiment 12 ainsi qu'au moins un équipement 16 placé dans le compartiment 12 au-dessus du plancher 14.

De manière connue, le fuselage 10 comprend une peau rapportée sur une structure.

A titre d'exemple, le compartiment 12 est un compartiment avionique de l'avion (appelé E&E bay en anglais) et l'équipement 16 peut être un équipement électrique ou électronique de l'avion.

Selon une configuration, compte tenu de la forme approximativement circulaire du fuselage 10, un espace 18 est disponible sous le plancher 14.

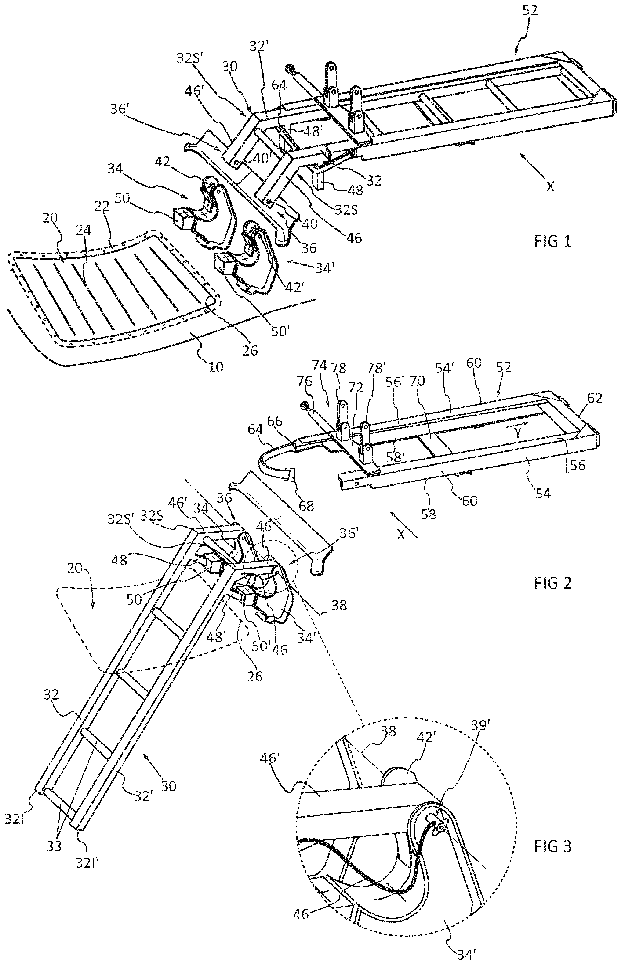

Comme illustré sur les figures 1, 5A et 5B, le fuselage 10 comprend une ouverture 20 délimitée par un contour 22 et obturée par un panneau amovible 24 de manière à dégager l'ouverture 20 lorsqu'on souhaite accéder au compartiment 12.

Selon un agencement, l'ouverture 20 débouche dans l'espace 18 et le plancher 14 comprend un passage dans le prolongement de l'ouverture 20 pour accéder à l'équipement 16 en passant par l'ouverture 20.

Selon une variante simplifiée, l'ouverture 20 débouche directement dans le compartiment 12.

Selon un mode de réalisation, le contour 22 décrit une forme carrée ou rectangulaire avec des angles arrondis. Il comprend au moins un rebord 26 rectiligne qui s'étend selon une direction longitudinale référencée X.

Ce rebord 26 est la partie du pourtour la plus proche du sol 28 (visible sur la figure 5B).

Pour accéder à l'équipement 16 via l'ouverture 20, l'avion comprend une échelle 30 rigide qui comprend deux montants 32, 32' reliés par des barreaux 33.

Chaque montant 32, 32' comprend une extrémité inférieure 32I, 32I' qui correspond à l'extrémité inférieure de l'échelle et une extrémité supérieure 32S, 32S' qui correspond à l'extrémité supérieure de l'échelle 30.

L'avion comprend deux supports 34, 34', un pour chaque montant 32, 32', solidaire du fuselage 10 et plus particulièrement de la structure de l'avion. Les supports 34, 34' sont solidarisés à la structure, à proximité du rebord 26, par tous moyens appropriés (Boulonnage, rivetage, autre).

Ces supports 34, 34' sont décalés l'un par rapport à l'autre selon la direction longitudinale X et espacés d'une distance approximativement égale à l'espacement des montants 32, 32'.

Pour chaque support 34, 34', l'échelle comprend un élément d'accrochage 36, 36' configuré pour coopérer avec le support 34, 34' correspondant.

Selon une autre variante, l'échelle 30 comprend au moins un élément d'accrochage 36 et l'avion comprend au moins un support 34.

Lorsque l'échelle 30 est suspendue aux supports 34, 34' par ses montants 32, 32', elle ne touche pas le sol. De préférence, les extrémités inférieures 32I, 32I' des montants sont relativement proches d'une surface de l'avion ou sont en contact avec ladite surface. A titre d'exemple, la surface de l'avion qui permet d'accéder à l'échelle est la partie supérieure d'une nacelle.

Cette configuration permet de réduire la longueur de l'échelle 30 et par conséquent de réduire sa masse. De plus, les montants 32, 32' ne sont plus simplement en appui contre le rebord mais sont reliés à l'avion par les supports 34, 34' ce qui contribue à rendre plus sûre l'utilisation de l'échelle 30. Selon un autre aspect, l'échelle n'étant jamais en contact avec le sol, sa longueur est indépendante de la hauteur D par rapport au sol de l'ouverture qui varie entre les valeurs Dmin et Dmax en fonction de la masse embarquée de l'avion.

Selon une autre caractéristique, pour chaque montant 32, 32', l'élément d'accrochage 36, 36' est positionné au niveau de l'extrémité supérieure 32S, 32S' du montant. Cette configuration permet de réduire la longueur de l'échelle 30 et donc sa masse. Selon un autre point, la partie de l'échelle à l'intérieur du fuselage est la plus réduite possible ce qui permet d'éviter que l'échelle encombre l'accès à l'équipement 16.

Selon une autre caractéristique, chaque élément d'accrochage 36, 36' est relié à son support 34, 34' par une liaison démontable qui comprend un axe de pivotement 38 intercalé entre l'élément d'accrochage 36, 36' et le support correspondant 34, 34'. Cet axe de pivotement 38 est orienté selon la direction longitudinale X et autorise une rotation de l'échelle 30 par rapport aux supports 34, 34'. Cette configuration permet un accrochage plus sûr entre l'échelle et l'avion.

Selon un mode de réalisation, chaque élément d'accrochage 36, 36' comprend un trou de passage 40, 40' traversant et chaque support 34, 34' comprend une chape 42, 42' avec deux orifices de passage 44, 44'. Chaque liaison démontable comprend une broche 39, 39' dont le diamètre est sensiblement égal au jeu près à celui des trous de passage 40, 40' et des orifices de passage 44, 44'. Les broches 39, 39' ont des axes confondus avec l'axe de pivotement 38.

Cette conception permet d'obtenir une liaison démontable de conception et d'utilisation simples.

De préférence, chaque broche 39, 39' est reliée à un montant par un lien souple 46 comme une chainette 46 par exemple.

Selon un mode de réalisation, chaque broche 39, 39' est une broche avec un système de verrouillage à bille actionnable par un bouton de type « ball lock button pin ». Ce système de verrouillage empêche le retrait des broches sans l'action sur un bouton.

Selon une autre caractéristique, chaque montant 32, 32' comprend au niveau de son extrémité supérieure 32S, 32S' un prolongement 46, 46' incliné par rapport au reste du montant supportant les barreaux 33. Selon cette configuration, pour chaque montant, l'élément d'accrochage 36, 36' est positionné à l'extrémité libre 46E, 46E' (visible sur la figure 4) de chaque prolongement 46, 46'.

La longueur et l'inclinaison du prolongement 46, 46' sont déterminées pour que les supports 34, 34' soient décalés par rapport au rebord 26 et n'interfèrent pas avec l'ouverture 20. Cette configuration permet de limiter l'encombrement de l'échelle 30 et des supports 34, 34' au niveau de l'ouverture 20.

Pour donner un ordre de grandeur, chaque prolongement 46, 46' forme un angle θ de l'ordre de 120° par rapport au reste du montant et a une longueur de l'ordre de 10 à 20 cm.

Pour éviter que l'échelle 30 prenne appui contre le rebord 26, au moins un montant 32, 32', et de préférence chaque montant 32, 32', comprend un écarteur 48, 48'. Selon un mode de réalisation, chaque écarteur 48, 48' se présente sous la forme d'un profilé dont une première extrémité est fixée au montant.

Selon un mode de réalisation, pour chaque montant, l'écarteur 48, 48' est un tube creux qui s'étend perpendiculairement au montant 32, 32' dans un plan contenant le montant 32, 32' et son prolongement 46, 46'.

Avantageusement, chaque support 34, 34' comprend une surface d'appui 50, 50' contre laquelle prend appui l'écarteur 48, 48' et plus particulièrement son extrémité libre. Pour chaque support 34, 34', la surface d'appui 50, 50' est décalée par rapport à la liaison démontable 36, 36' de manière à limiter la rotation de l'échelle 30 par rapport au support 34, 34'.

Selon un mode de réalisation chaque support a une forme en C, une première branche du C comprenant à son extrémité la chape 42, 42', une seconde branche du C comprenant à son extrémité la surface d'appui 50, 50'.

Afin d'optimiser sa masse, les différentes parties de l'échelle, à savoir les montants 32, 32', les barreaux 33, les prolongements 46, 46', les écarteurs 48, 48' sont des profilés creux en alliage d'aluminium.

Avantageusement, l'avion comprend une glissière de rangement 52 dans laquelle est rangée l'échelle 30 lorsqu'elle n'est pas utilisée.

Comme illustré sur la figure 2, la glissière de rangement 52 comprend deux longerons 54, 54' avec une section en C, disposés en vis-à-vis, chacun d'eux étant configuré pour recevoir un montant 32, 32' de l'échelle, et les guider selon une direction de rangement Y, lors de l'introduction ou du retrait de l'échelle.

Chaque longeron 54, 54' comprend une aile supérieure 56, 56', une aile inférieure 58, 58' et une paroi latérale 60, 60' reliant les deux ailes supérieure et inférieure.

Pour chaque longeron, les ailes supérieure et inférieure sont espacées d'une distance permettant de faire coulisser l'un des montants 32, 32' avec un jeu relativement faible. Les parois latérales 60, 60' sont espacées de manière à ce que les deux montants 32, 32' espacés des barreaux 33 coulissent entre les parois latérales 60, 60' avec un jeu relativement faible.

La glissière de rangement 52 comprend au moins une traverse terminale 62, reliant les deux longerons 54, 54', prévue pour limiter le mouvement de l'échelle 30 selon la direction de rangement Y.

Selon un mode de réalisation, la traverse terminale 62 a une section en C et relie les extrémités des deux longerons 54, 54'.

De préférence, la glissière de rangement 52 comprend une sangle 64 pour immobiliser l'échelle 30 dans la glissière de rangement. Selon un mode de réalisation, la sangle 64 comprend une première extrémité 66 reliée à un premier longeron 54' et une seconde extrémité 68 équipée d'une liaison détachable avec le second longeron 54. A titre d'exemple, la liaison détachable comprend une boucle solidaire de la seconde extrémité 68 de la sangle 64 qui coopère avec un crochet solidaire du second longeron 54. D'autres moyens pourraient être utilisés pour immobiliser l'échelle 30 dans la glissière de rangement 52.

La glissière de rangement 52 comprend en plus de la traverse terminale 62, d'autres traverses reliant les deux longerons 54, 54'. Selon un mode de réalisation, la glissière de rangement comprend une traverse inférieure 70 reliant les ailes inférieures 58, 58' des longerons 54, 54' et une traverse supérieure 72 reliant les ailes supérieures 56, 56' des longerons 54, 54'.

De préférence, la glissière de rangement 52 est disposée sous le plancher 14 et reliée à ce dernier par tous moyens appropriés. Cependant, l'invention n'est pas limitée à cette implantation. Ainsi, la glissière de rangement 52 pourrait être reliée à d'autres parties de l'avion.

Quelle que soit l'implantation, la glissière de rangement 52 est positionnée correctement par rapport à l'ouverture 20 de manière à ce que l'échelle 30 soit accessible depuis le sol, puisse être retirée de la glissière de rangement 52 et sortie de l'avion via l'ouverture 20.

Selon un mode de réalisation, la glissière de rangement 52 est reliée au plancher 14 par une liaison 74 qui comprend une biellette 76, et deux pattes 78, 78' qui relient la traverse supérieure 72 au plancher. Bien entendu, l'invention n'est pas limitée à ce mode de réalisation pour la liaison 74 entre la glissière de rangement et l'avion.

L'utilisation de l'échelle est relativement simple.

Lorsque l'échelle n'est pas utilisée, elle est stockée dans la glissière de rangement 52. La sangle 64 est reliée au second longeron 54 et immobilise l'échelle dans la glissière de rangement 52, comme illustré sur la figure 5A.

Pour accéder à l'équipement 16, un opérateur retire le panneau amovible 24.

Pour sortir l'échelle 30 de la glissière de rangement 52, il détache la sangle 64 du second longeron 54 et tire l'échelle 30 en dehors de la glissière de rangement.

Après avoir sorti l'échelle 30 de la glissière de rangement 52 et de l'avion via l'ouverture 20, l'opérateur fait coïncider les extrémités des prolongements 46, 46' avec les chapes 42, 42', et insère les broches 39, 39' dans les trous de passage 40, 40' et les orifices de passage 44, 44'. En raison du poids de l'échelle, les écarteurs 48, 48' viennent naturellement en contact avec les surfaces d'appui 50, 50'. Il peut alors grimper sur l'échelle comme illustré sur la figure 5B pour accéder à l'équipement 16.

Lorsque l'opérateur souhaite ranger l'échelle 30, il retire les broches 39, 39' en appuyant pour chacune d'elles sur un bouton de déverrouillage. Après avoir désolidarisé l'échelle des supports 34, 34', il l'insère dans la glissière de rangement 52, puis rattache la sangle 64 au second longeron 54. Il peut alors repositionner le panneau amovible 24 pour fermer l'ouverture 20.

## Revendications

1. Avion comprenant une ouverture (20) pour accéder à un compartiment (12), et une échelle (30) pour accéder au compartiment (12) à travers l'ouverture (20), l'avion comprenant au moins un support (34, 34') et une glissière de rangement (52) dans laquelle l'échelle (30) est rangée lorsqu'elle n'est pas utilisée, l'échelle (30) comprenant deux montants (32, 32'), et pour chaque montant (32, 32'), un élément d'accrochage (36, 36') positionné à une extrémité supérieure (32S, 32S') du montant (32, 32'), dont chaque élément d'accrochage (36, 36') est relié, lorsque l'échelle est utilisée, à un support (34, 34') par une liaison démontable qui comprend un axe de pivotement (38), **caractérisé en ce que** chaque élément d'accrochage (36, 36') comprend un trou de passage (40, 40'), **en ce que** chaque support (34, 34') comprend une chape (42, 42') avec deux orifices de passage (44, 44') et **en ce que** chaque liaison démontable comprend une broche (39, 39') laquelle est insérée dans les trous de passage (40, 40') et les orifices de passage (44, 44') lorsque l'échelle est utilisée.

2. Avion selon la revendication 1, **caractérisé en ce que** chaque broche (39, 39') comprend un système de verrouillage à bille actionnable par un bouton.

3. Avion selon l'une des revendications 1 ou 2, **caractérisé en ce que** chaque montant (32, 32') comprend un prolongement (46, 46') incliné par rapport au reste du montant, l'élément d'accrochage (36, 36') étant positionné à l'extrémité libre (46E, 46E') du prolongement (46, 46').

4. Avion selon la revendication 3, **caractérisé en ce que** l'échelle (30) comprend au moins un écarteur (48, 48') et **en ce que** chaque support (34, 34') comprend une surface d'appui (50, 50') contre laquelle l'écarteur (48, 48') prend appui.

5. Avion selon l'une des revendications précédentes, **caractérisé en ce que** la glissière de rangement (52) comprend deux longerons (54, 54') avec une section en C disposés en vis-à-vis, chacun d'eux étant configuré pour recevoir un montant (32, 32') de l'échelle (30), ainsi qu'au moins une traverse terminale (62) reliant les deux longerons (54, 54').

6. Avion selon la revendication 5, **caractérisé en ce que** la glissière de rangement (52) comprend une sangle (64) qui comprend une première extrémité (66) reliée à un premier longeron (54') et une seconde extrémité (68) équipée d'une liaison détachable qui coopère avec le second longeron (54).

## Patentansprüche

1. Flugzeug, das eine Öffnung (20) für den Zugang zu einem Abteil (12) und eine Leiter (30) für den Zugang zum Abteil (12) durch die Öffnung (20) hindurch enthält, wobei das Flugzeug mindestens einen Träger (34, 34') und eine Ablageschiene (52) enthält, in der die Leiter (30) verstaut wird, wenn sie nicht verwendet wird, wobei die Leiter (30) zwei Holme (32, 32') und für jeden Holm (32, 32') ein Befestigungselement (36, 36') enthält, das an einem oberen Ende (32S, 32S') des Holms (32, 32') positioniert ist, wobei jedes Befestigungselement (36, 36'), wenn die Leiter verwendet wird, über eine auseinandernehmbare Verbindung, die eine Schwenkachse (38) enthält, mit einem Träger (34, 34') verbunden ist, **dadurch gekennzeichnet, dass** jedes Befestigungselement (36, 36') ein Durchgangsloch (40, 40') enthält, dass jeder Träger (34, 34') einen Gabelkopf (42, 42') mit zwei Durchgangslöchern (44, 44') enthält, und dass jede auseinandernehmbare Verbindung einen Stift (39, 39') enthält, der in die Durchgangslöcher (40, 40') und die Durchgangslöcher (44, 44') eingeführt wird, wenn die Leiter verwendet wird.

2. Flugzeug nach Anspruch 1, **dadurch gekennzeichnet, dass** jeder Stift (39, 39') ein Kugelverriegelungssystem enthält, das durch einen Knopf betätigbar ist.

3. Flugzeug nach einem der Ansprüche 1 oder 2, **dadurch gekennzeichnet, dass** jeder Holm (32, 32') eine bezüglich des Rests des Holms geneigte Verlängerung (46, 46') enthält, wobei das Befestigungselement (36, 36') am freien Ende (46E, 46E') der Verlängerung (46, 46') positioniert ist.

4. Flugzeug nach Anspruch 3, **dadurch gekennzeichnet, dass** die Leiter (30) mindestens einen Abstandshalter (48, 48') enthält, und dass jeder Träger (34, 34') eine Anlagefläche (50, 50') enthält, gegen die der Abstandshalter (48, 48') sich anlegt.

5. Flugzeug nach einem der vorhergehenden Ansprüche, **dadurch gekennzeichnet, dass** die Ablageschiene (52) zwei Längsträger (54, 54') mit einem C-Querschnitt, die einander gegenüber angeordnet sind, wobei jeder von ihnen konfiguriert ist, einen Holm (32, 32') der Leiter (30) aufzunehmen, sowie mindestens einen Endquerträger (62) enthält, der die zwei Längsträger (54, 54') verbindet.

6. Flugzeug nach Anspruch 5, **dadurch gekennzeichnet, dass** die Ablageschiene (52) einen Gurt (64) enthält, der ein erstes Ende (66), das mit einem ersten Längsträger (54') verbunden ist, und ein zweites Ende (68) enthält, das mit einer lösbaren Verbindung ausgestattet ist, die mit dem zweiten Längsträger (54) zusammenwirkt.

## Claims

1. Aircraft comprising an opening (20) for accessing a compartment (12) and a ladder (30) for accessing the compartment (12) through the opening (20), the aircraft comprising at least one support (34, 34') and a storage slide (52), in which slide the ladder (30) is stored when not being used, the ladder (30) comprising two sides (32, 32') and, for each side (32, 32'), a fastener element (36, 36') positioned at an upper end (32S, 32S') of the side (32, 32'), each fastener element (36, 36') of which is connected, when the ladder is being used, to a support (34, 34') by a removable connection comprising a pivot axis (38), **characterized in that** each fastener element (36, 36') comprises a through-hole (40, 40'), **in that** each support (34, 34') comprises a clevis (42, 42') with two through-openings (44, 44'), and **in that** each removable connection comprises a pin (39, 39') which is inserted in the through-holes (40, 40') and the through-openings (44, 44') when the ladder is being used.

2. Aircraft according to Claim 1, **characterized in that** each pin (39, 39') comprises a ball-lock system actuatable by a button.

3. Aircraft according to either of Claims 1 and 2, **characterized in that** each side (32, 32') comprises an extension (46, 46') inclined relative to the rest of the side, the fastener element (36, 36') being positioned at the free end (46E, 46E') of the extension (46, 46').

4. Aircraft according to Claim 3, **characterized in that** the ladder (30) comprises at least one spacer (48, 48'), and **in that** each support (34, 34') comprises a bearing surface (50, 50') against which the spacer (48, 48') bears.

5. Aircraft according to one of the preceding claims, **characterized in that** the storage slide (52) comprises two side rails (54, 54') with a C-shaped cross section arranged opposite one another, each designed to receive a side (32, 32') of the ladder (30), and also at least one end cross-member (62) connecting the two side rails (54, 54').

6. Aircraft according to Claim 5, **characterized in that** the storage slide (52) comprises a strap (64), which comprises a first end (66) connected to a first side rail (54') and a second end (68) equipped with a detachable connection that cooperates with the second side rail (54).
